(19) Europäisches Patentamt

European Patent Office

Office européen des brevets

(11) **EP 3 518 402 B1**

(12) **EUROPEAN PATENT SPECIFICATION**

(45) Date of publication and mention
of the grant of the patent:
**05.08.2020 Bulletin 2020/32**

(21) Application number: **18153157.5**

(22) Date of filing: **24.01.2018**

(51) Int Cl.:
*H02M 1/32* *(2007.01)*      *H02M 1/36* *(2007.01)*
*H02M 3/335* *(2006.01)*

(54) **RESONANT POWER CONVERTER AND METHOD OF RESTARTING AN OUTPUT RECTIFIER OF A RESONANT POWER CONVERTER**

RESONANTER LEISTUNGSWANDLER UND VERFAHREN ZUM NEUSTARTEN EINES AUSGABEGLEICHRICHTERS EINES RESONANZLEISTUNGSWANDLERS

CONVERTISSEUR DE PUISSANCE RÉSONANT ET PROCÉDÉ DE REDÉMARRAGE D'UN REDRESSEUR DE SORTIE D'UN CONVERTISSEUR DE PUISSANCE RÉSONANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**31.07.2019 Bulletin 2019/31**

(73) Proprietor: **FRIWO Gerätebau GmbH
48346 Ostbevern (DE)**

(72) Inventor: **XU, Linzhong
48268 Greven (DE)**

(74) Representative: **Grünecker Patent- und
Rechtsanwälte
PartG mbB
Leopoldstraße 4
80802 München (DE)**

(56) References cited:
**US-A1- 2003 067 794     US-A1- 2009 016 083
US-A1- 2017 288 558**

**Description**

The present invention relates to a resonant power converter and to a method to reduce voltage spikes across an output synchronous rectifier of a resonant converter, such as an LLC resonant converter, during restart.

Generally, resonant power conversion has the advantage of smooth waveforms, high efficiency, and high power density. From their physical principle, resonant converters are switching converters that include a tank circuit actively participating in determining input-to-output power flow. Resonant converters are based on a resonant inverter, i. e. a system that converts a DC voltage into a sinusoidal voltage (more generally, into a low harmonic content AC voltage), and provides AC power to a load. To do so, a switch network typically produces a square-wave voltage that is applied to a resonant tank tuned to the fundamental component of the square wave. In this way, the tank will respond primarily to this component and negligibly to the higher order harmonics, so that its voltage and/or current, as well as those of the load, will be essentially sinusoidal or piecewise sinusoidal. A resonant DC-DC converter able to provide DC power to a load can be obtained by rectifying and filtering the AC output of a resonant inverter.

US 2009/0016083 A1 relates to a resonant converter including a primary side switching stage having high- and low-side switches series connected at a switching node and controlled by a primary side controller. A transformer is provided having a primary coil and a secondary coil, the secondary coil having at least one pair of portions series connected at a node, a resonant tank formed by series connecting the primary coil to the switching node with a first inductor and a first capacitor. At least one pair of first and second secondary side switches is connected to the at least one pair of portions, respectively, the first and second secondary side switches of each pair being used for synchronous rectification. A secondary side controller is provided to control and drive the first and second secondary side switches of each pair by sensing voltage across each secondary side switch and determining a turn ON and turn OFF transition for the first and second secondary side switches in close proximity to a point in time when there is zero current through the secondary side switch to achieve synchronous rectification.

US 2017/0288558 A1 discloses a voltage discharge circuit. In this document, technologies are described for an adaptable power supply that can switch between two or more output voltages. The power supply includes discharge circuitry that utilizes the secondary windings of a transformer as a discharge path when the power supply switches from a high voltage level to a low voltage level. In some embodiments, the discharge circuitry is included within a synchronous rectifier. In other embodiments, the discharge circuitry is separate from the synchronous rectifier. In still other embodiments, the power supply does not include a synchronous rectifier. Whichever embodiment is used, an output capacitor can be discharged through the secondary windings of a transformer and the transformer can store that energy for future use.

Different types of DC-AC inverters can be built, depending on the type of switch network and on the characteristics of the resonant tank, i.e. the number of its reactive elements and their configuration. One advantageous type of resonant converter is the half-bridge LLC resonant converter. The LLC resonant half-bridge belongs to the family of multiresonant converters. The resonant tank includes three reactive elements, a capacitor in series with two inductors.

There are two ways to implement the magnetic components. One is to have a separate inductor plus a nearly ideal transformer which has a very small leakage inductance. The other is to use an integrated transformer which integrates the resonant inductor in the transformer. Such an integrated transformer may comprise a split bobbin, a cover, a primary winding, a secondary winding, and ferrite cores. This construction of a transformer has a large leakage inductance by separating the primary winding and the secondary winding physically by means of a split bobbin. Therefore, by using such an integrated transformer, due to the big leakage inductance, no separate resonant inductor is needed.

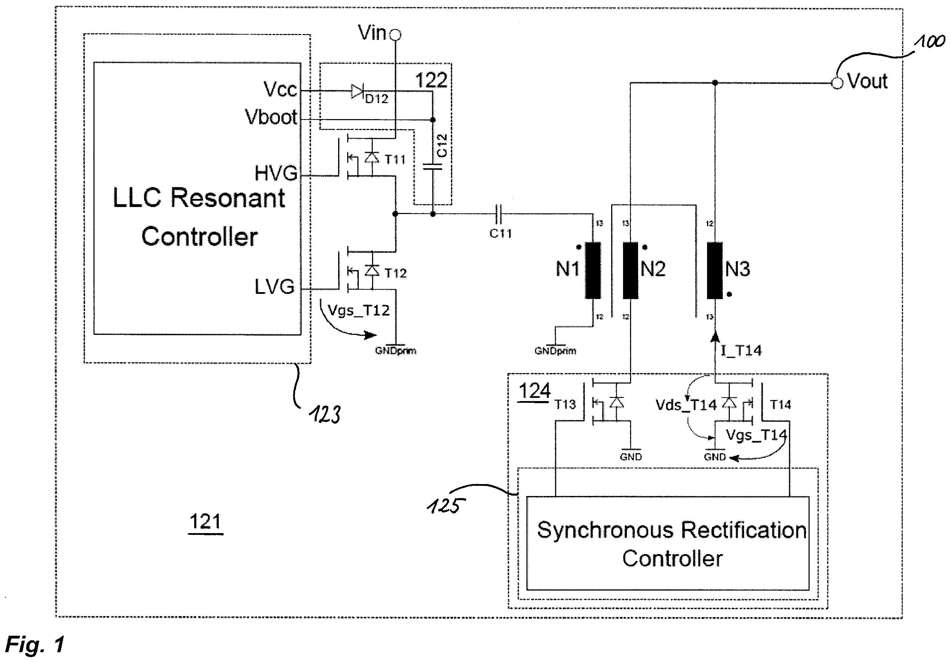

Fig. 1 shows a half-bridge LLC resonant converter 121 having a primary sided winding N1 and a resonant capacitor C11 connected in series with the primary sided winding N1. The primary sided winding N1 is part of an integrated transformer which integrates the resonant inductor in the transformer. However, it is apparent for a person skilled in the art that also a transformer with low leakage inductance may be used together with an additional resonant inductor.

In a resonant converter including but not limited to such a half-bridge LLC resonant converter 121, a high-side switch T11 is provided which can be a power switch including but not limited to an N-channel metal oxide semiconductor field effect transistor (MOSFET).

In order to drive the high-side switch T11, a bootstrap circuitry 122 is normally applied to obtain the supply of the floating high-side section. To ensure proper driving of the high-side switch from the first cycle, in the LLC resonant controller 123 it is customary to start the switching activity by turning on the low-side switch T12 for a preset time to pre-charge the bootstrap capacitor C12. The low-side switch T12 may comprise a power switch including but not limited to an N-channel metal oxide semiconductor field effect transistor (MOSFET). After pre-charging the bootstrap capacitor C12, the converter 121 enters a soft-start phase in order to progressively increase the converter power capability during startup to avoid excessive inrush current. The soft-start is done by sweeping the operating frequency from an initial high value until the control loop takes over because in LLC resonant converters the deliverable output power depends inversely on the operating frequency.

In applications with high output current, instead of diode rectifiers, synchronous rectification 124 is implemented to have a higher efficiency.

The synchronous rectifiers T13 and T14 that can be power switches (including but not limited to N-channel metal oxide semiconductor field effect transistors, MOSFETs) that have small on-resistance and lower forward-voltage drop than that of diode rectifiers and thus the losses caused by rectifiers can be reduced.

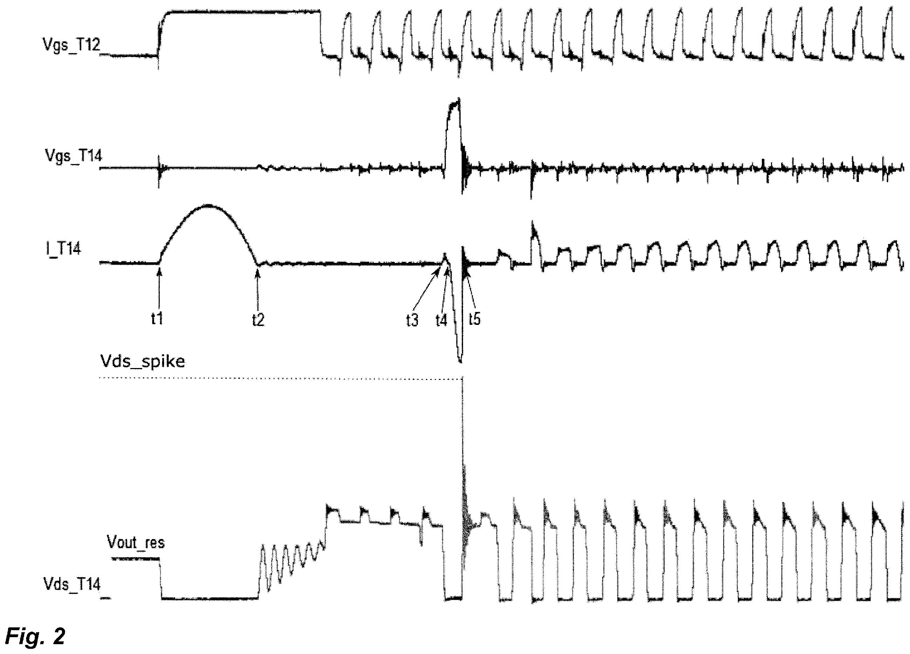

To drive such synchronous rectifiers, a synchronous rectification controller 125 is commonly used. On the one hand, in order to reduce the standby losses related to the synchronous rectification 124, the synchronous rectification controller 125 should be deactivated at standby or with light load. Therefore, the driver output of the synchronous rectification controller 125 is only activated when in the previous cycle, the duration that a current flows through the synchronous rectifier is longer than a minimal conduction duration ton_min. For instance, this minimal conduction duration ton_min may include but is not limited to 1 $\mu$s. Fig. 2 illustrates timing diagrams of various parameters of the converter 121 shown in Fig. 1.

As soon as the conduction duration of the synchronous rectifier is shorter than the minimal conduction duration ton_min, the driver output of the synchronous rectification controller 125 is disabled again. In this way, for the short duration pulses in burst mode at standby or with light load, the driver output of the synchronous rectification controller 125 is disabled so that the standby loss is reduced.

On the other hand, in order to eliminate false switch-off due to high frequency ringing, after switch-on of the synchronous rectifier, the switch stays in the on-state at least for a minimum duration, which is known as blanking time ton_blank, including but not limited to 0.8 $\mu$s.

As mentioned above, to pre-charge the bootstrap capacitor C12, the low-side switch T12 is switched on for a relatively long duration during which the synchronous rectifier T14 also conducts for a period of (t1-t2) as shown in Fig. 2. After this duration (t1-t2), the soft-start begins. Because the duration (t1-t2) is longer than the minimal conduction duration ton_min, next time when the synchronous rectifier T14 conducts again at instance t3, the driver output Vgs_T14 of the synchronous rectification controller 125 is enabled. Although at the instance t3, the soft-start already begins and thus the pulse duration is very short and the current flowing through the synchronous rectifier T14 is very small, the synchronous rectifier T14 is not switched off for the duration of the blanking time ton_blank. Therefore, the current flowing through T14 is not stopped although the current reaches zero.

The current flowing through T14 will flow reversely if at this moment there is still a residual voltage on the output side. The amplitude of this negative current increases linearly due to the inductance of the winding N3. The change rate of this current is proportional to the residual output voltage Vout_res. The negative current reaches its maximum amplitude until the synchronous rectification controller 125 disables its driver output after the duration of the blanking time ton_blank.

After the synchronous rectifier T14 is switched off, an oscillation occurs due to the leakage inductance of the winding N3 and the output capacitance of the synchronous rectifier Cout_T14. This oscillation causes a voltage spike across the synchronous rectifier T14 which is much higher than the voltage in normal operation and therefore can lead to a breakdown of the synchronous rectifier T14 if its voltage rating is not high enough.

In applications where the output impedance is very high, the residual voltage can remain for a very long time. In this case, when the LLC resonant converter restarts, a high voltage spike occurs across the synchronous rectifier. Even for applications where the output impedance is low, the voltage spike can also occur if the LLC resonant converter restarts shortly after switching off.

The object underlying the present invention is to provide means for avoiding the occurrence of voltage spikes Vds_spike across the synchronous rectifier T14, at the same time allowing for an economic and simple architecture of the resonant converter.

This object is solved by the subject matter of the independent claims. Advantageous embodiments of the present invention are the subject matter of the dependent claims.

To solve this problem, according to the present invention, a simple circuitry is used to discharge the residual voltage at the output side to a very low level or even to zero before restarting. In doing so, the above-mentioned voltage spike can be reduced to a safe level or even eliminated.

The inventor of the present invention has recognized that the residual voltage has to be discharged in order to influence the voltage spike. Because the residual output voltage Vout_res determines the change rate of the negative current, for the fixed duration of the blanking time ton_blank, it means that the residual output voltage Vout_res also determines the amplitude of the negative current Imax. The energy E stored in the leakage inductance is given by equation (1):

$$E = 0.5 * L_{leakage} * Imax^2 \tag{1}$$

This inductive energy E is totally transferred to the capacitive energy $E_C$ which can be expressed according to equation (2) when the synchronous rectifier is switched off:

$$E_C = 0.5 * C_{out\_T14} * V_{ds\_spike}^2 \qquad (2)$$

where Cout_T14 is the output capacitance of the synchronous rectifier T14. Therefore, the residual output voltage Vout_res, which determines Imax in equation (1), determines the voltage spike Vds_spike across the synchronous rectifier T14.

In particular, a resonant power converter comprises a transformer having a primary sided winding and at least one secondary sided winding, and at least one primary sided switch which is controlled by a primary sided controller and is connected to the primary sided winding. A secondary sided synchronous rectifier is controlled by a synchronous rectification controller and is connected to the at least one secondary sided winding for outputting a rectified output voltage at an output terminal.

According to the present invention, a discharge circuit is connected to the output terminal and is operable to lower said output voltage during startup of the resonant power converter. Thereby, the following advantages are provided: No higher voltage rating synchronous rectifiers are necessary so that no additional cost increase is caused. Moreover, no additional snubbers for the synchronous rectifiers are needed so that no additional losses are generated and thus high efficiency can be reached.

According to an advantageous embodiment of the present invention, the discharge circuit is connected between said output terminal and ground, said discharge circuit comprising a discharge switch and a discharge resistor, which is connected in series between said output terminal and the discharge switch. Thus, an additional load is formed which can be connected to the output terminal in a controlled manner, thereby providing an efficient and simple means for discharging the residual output voltage.

According to a comparative example, the resonant power converter further comprises a microcontroller for controlling the discharge circuit. This microcontroller may for instance be formed by the microcontroller that is used in a power supply unit anyway.

In case a microcontroller is used, same needs to be powered for the startup without activating the resonant power converter as such. Therefore, according to an advantageous embodiment, an auxiliary power supply is provided for powering said microcontroller at least during startup of the resonant power converter.

According to a further comparative example, the resonant power converter further comprises a voltage divider circuit which is connected in parallel to said discharge circuit and is connected to the microcontroller for measuring said output voltage. This solution has the advantage that instead of activating the discharge circuit for an estimated time span, the actual value of the residual output voltage can be used for determining when the discharging process has lowered the residual output voltage sufficiently so that dangerous voltage spikes can be avoided.

According to the claimed invention, the resonant power converter comprises an enable signal input terminal for inputting a first enable signal, and a delay circuit which is connected between said enable signal input terminal and the primary sided controller for providing a second enable signal. Thereby, the enabling of the primary sided controller is delayed until the discharge step has been performed, without the necessity of a microcontroller. Thus, a particularly simple and economic power supply can be realized.

In order to ensure that the discharging is performed, a pullup circuit is connected to said enable signal input terminal for activating said discharge circuit before the second enable signal is provided to the primary sided controller. Furthermore, a feedback switch is provided, which is controlled by the second enable signal for de-activating said discharge circuit and said pullup circuit.

The advantages of the solution according to the present invention may best be used in connection when the resonant power converter is formed as a half-bridge LLC resonant converter. However, it is clear for a person skilled in the art that any other type of resonant converter may also be adapted to comprise discharge circuitry according to the present invention.

According to an advantageous embodiment of the present invention, the discharge switch comprises an N-channel metal oxide semiconductor field effect transistor (MOSFET). This is a particularly economic choice. However, it is clear for a person skilled in the art that all other suitable switches, e.g. insulated gate bipolar transistors (IGBTs), may also be used.

The present invention further relates to a method of restarting an output rectifier of a resonant power converter. The method comprises the following steps:

activating said resonant power converter for exiting a standby mode of said resonant power converter by inputting a first enable signal,

activating a discharge circuit, wherein the discharge circuit is connected to an output terminal of the resonant power converter, so that a residual output voltage at the output terminal is reduced,

after the discharge step has been performed, providing a second enable signal for enabling the operation of the resonant power converter.

According to an advantageous embodiment, a minimum delay time between activating the discharge circuit and outputting the second enable signal is determined. This time may either be derived from measurements or may be calculated. For instance, the minimum delay time may be calculated as the time a maximum possible residual output voltage needs to be discharged to zero.

In order to yield more accurate information as to when the second enable signal may be activated safely, the method may further comprise the step of measuring a residual output voltage at the output terminal, wherein the second enable signal is output after the measured residual output voltage has fallen below a predetermined threshold.

According to a comparative example, the first enable signal may be received by a microcontroller, wherein the second enable signal is generated by the microcontroller. For instance when using the present invention with a battery charger, such a charger usually has a microcontroller that controls and monitors the operation of the charger. This microcontroller can be adapted to support the method for restarting an output rectifier of a resonant power converter.

However, according to the present invention, the method is performed using an analog circuitry. Advantageously, the first enable signal is received by a delay circuit which generates the second enable signal as the delayed first enable signal. In this case, the discharge circuit may be activated by the first enable signal in order to ensure that the discharging has been performed before the second enable signal is generated.

The accompanying drawings are incorporated into the specification and form a part of the specification to illustrate several embodiments of the present invention. These drawings, together with the description serve to explain the principles of the invention. The drawings are merely for the purpose of illustrating the preferred and alternative examples of how the invention can be made and used, and are not to be construed as limiting the invention to only the illustrated and described embodiments. Furthermore, several aspects of the embodiments may form-individually or in different combinations-solutions according to the present invention. The following described embodiments thus can be considered either alone or in an arbitrary combination thereof. Further features and advantages will become apparent from the following more particular description of the various embodiments of the invention, as illustrated in the accompanying drawings, in which like references refer to like elements, and wherein:

**FIG. 1** is a schematic circuit diagram of a half-bridge LLC resonant converter;

**FIG. 2** is a schematic timing diagram illustrating the operation of the circuit shown in Fig. 1;

**FIG. 3** is a schematic circuit diagram of a protective circuit for an LLC resonant converter according to a comparative example;

**FIG. 4** is a schematic circuit diagram of a protective circuit for an LLC resonant converter according to the present invention.

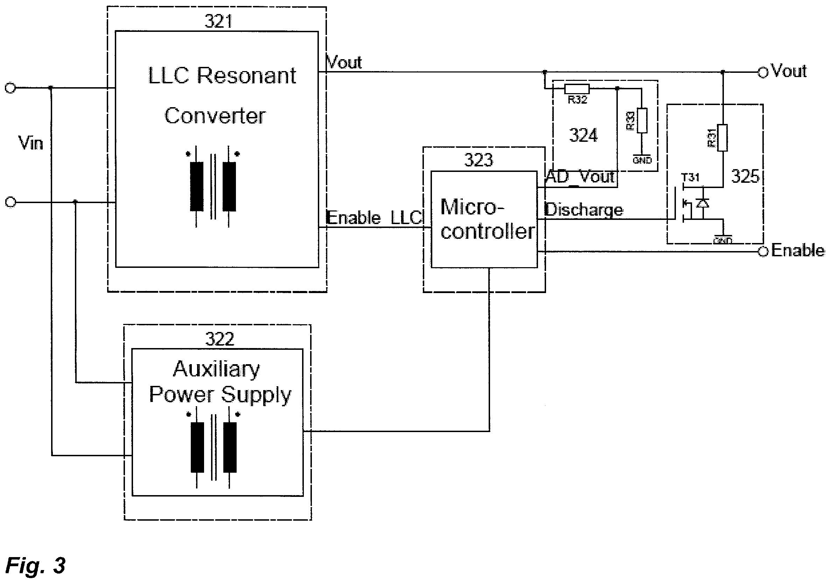

The present invention will now be explained in more detail with reference to the Figures and firstly referring to Fig. 3.

Fig. 3 shows an exemplary embodiment of protective circuitry that can be employed with a microcontroller being already used. For instance when using the circuitry with a battery charger, such a charger usually has a microcontroller that controls and monitors the operation of the charger. This microcontroller can be adapted to support the method for restarting an output rectifier of a resonant power converter.

In such applications including but not limited to battery chargers, a microcontroller 323 is already used for other purposes. To reduce the standby losses, the main converter, in this case, the LLC resonant converter 321 is disabled in standby mode and the microcontroller 323 is supplied by an auxiliary power supply 322.

Upon an event, the power converter needs to exit the standby mode. But due to the high output impedance, the residual voltage at Vout is still rather high. In this case, if the LLC resonant converter is directly switched on without discharging the Vout, a high voltage spike occurs across the synchronous rectifier T14 which can lead to a breakdown of the synchronous rectifier T14 as described above.

Since the microcontroller 323 is already available, the output voltage is easily to be discharged by adding a discharge circuitry 325. After the microcontroller 323 received the command "exiting the standby mode" through the enable signal, the microcontroller 323 does not directly enable the LLC resonant converter 321 but activates the discharge circuitry 325 by the I/O pin "Discharge". After a minimum delay which can be determined by calculation or measurement, the output voltage Vout is discharged low enough, the LLC resonant converter 321 is enabled by the microcontroller 323 through the I/O pin "Enable _LLC". The minimum delay should be determined in worst case with maximum residual output voltage on Vout.

Even better, if an ADC channel of the microcontroller 323 is still available, by adding a voltage divider circuitry 324, the residual voltage on Vout can be monitored by the microcontroller 323. After a low enough voltage at Vout is detected, the microcontroller 323 enables the LLC resonant converter 321.

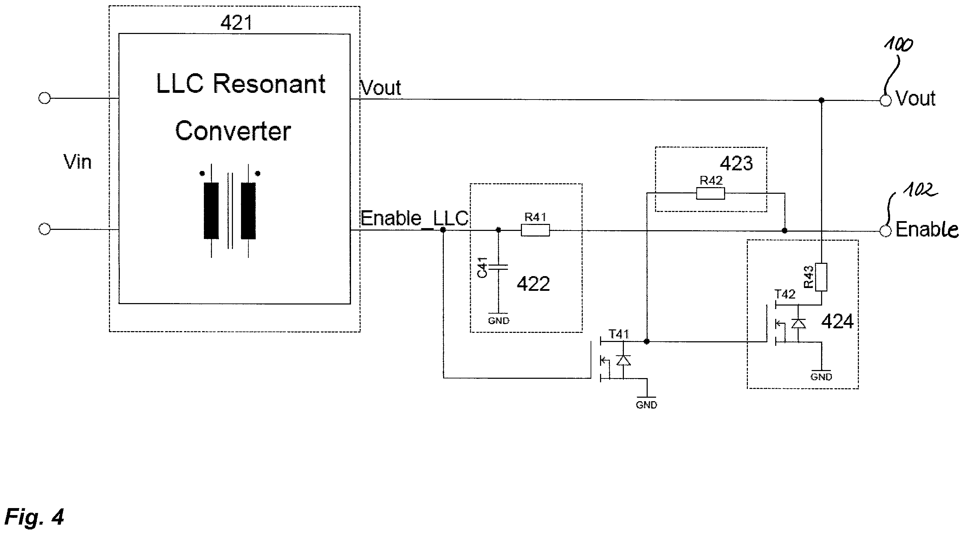

For applications without a microcontroller being used, Fig. 4 shows the solution in accordance with claim 1. The first enable signal Enable and the second enable signal Enable_LLC are decoupled through the delay circuitry 422. When the first enable signal Enable is received, due to the pullup circuitry 423, the discharge circuitry 424 is first enabled.

After the certain delay time caused by the delay circuitry 422, the Enable_LLC is high enough to turn on the switching element T41 which pulls down the voltage on the gate of the switching element T42 leading to disable the discharge circuitry 424. At this moment, the residual voltage on Vout is already low enough so that the restart of the LLC resonant converter 421 does not cause any voltage spikes across the synchronous rectifier T14.

**REFERENCE NUMERALS**

| Reference Numeral | Description |
| --- | --- |
| 100 | Output terminal |
| 102 | Enable signal input terminal |
| 121, 321, 421 | Half-bridge LLC resonant converter |
| 122 | Bootstrap circuit |
| 123 | LLC resonant controller |
| 124 | Synchronous rectifier |
| 125 | Synchronous rectification controller |
| 322 | Auxiliary power supply |
| 323 | Microcontroller |
| 324 | Voltage divider circuit |
| 325 | Discharge circuit |
| 422 | Delay circuit |
| 423 | Pullup circuit |
| 424 | Discharge circuit |
| First enable signal | Enable |
| Second enable signal | Enable_LLC |
| Vout | Output voltage |

**Claims**

1. Resonant power converter comprising:

   a transformer having a primary sided winding (N1) and at least one secondary sided winding (N2, N3), a primary sided controller (123);
   a synchronous rectification controller (125); at least one primary sided switch (T11, T12) which is controlled by said primary sided controller (123) and is connected to said primary sided winding (N1),
   a secondary sided synchronous rectifier (124) which is controlled by said synchronous rectification controller (125) and is connected to said at least one secondary sided winding (N2, N3) for outputting a rectified output voltage (Vout) at an output terminal (100), **characterised in**:

   a discharge circuit (424) which is connected to said output terminal and is operable to lower said output voltage during startup of the resonant power converter,
   wherein the resonant power converter further comprises an enable signal input terminal (102) for inputting a first enable signal (Enable), and a delay circuit (422) which is connected between said enable signal input terminal (102) and the primary sided controller (123) for providing a second enable signal (Enable_LLC), further comprising a pullup circuit (423) which is connected to said enable signal input terminal (102) for activating said discharge circuit (424) before the second enable signal (Enable_LLC) is provided to the primary sided controller (123), and
a feedback switch (T41) which is controlled by the second enable signal (Enable_LLC) for de-activating said discharge circuit (424) and said pullup circuit (423).

2. Resonant power converter according to claim 1, wherein the discharge circuit (424) is connected between said output terminal (100) and ground, said discharge circuit (325) comprising a discharge switch (T31, T42) and a discharge resistor (R31, R43), which is connected in series between said output terminal and the discharge switch (T31, T42).

3. Resonant power converter according to one of the preceding claims, wherein said resonant power converter is formed as a half-bridge LLC resonant converter.

4. Resonant power converter according to one of the preceding claims, wherein the discharge switch (T31, T42) comprises an N-channel metal oxide semiconductor field effect transistor, MOSFET.

5. Method of restarting an output rectifier of a resonant power converter according to one of the preceding claims, said method comprising the following steps:

activating said resonant power converter for exiting a standby mode of said resonant power converter by inputting said first enable signal (Enable),
activating said discharge circuit (424), wherein the discharge circuit (424) is connected to an output terminal (100) of the resonant power converter, so that a residual output voltage (Vout) at the output terminal (100) is reduced,
after the discharge step has been performed, providing said second enable signal (Enable_LLC) for enabling the operation of the resonant power converter,
wherein the first enable signal is received by said delay circuit (422) which generates the second enable signal as the delayed first enable signal, and
wherein the discharge circuit (424) is activated by the first enable signal (Enable).

6. Method according to claim 8, wherein a minimum delay time between activating the discharge circuit and outputting the second enable signal is determined.

7. Method according to claim 9, wherein the minimum delay time is calculated as the time a maximum possible residual output voltage needs to be discharged to zero.

**Patentansprüche**

1. Resonanzleistungswandler, umfassend:

einen Transformator mit einer primärseitigen Wicklung (N1) und mindestens einer sekundärseitigen Wicklung (N2, N3),
eine primärseitige Steuerung (123);
eine Synchrongleichrichtungssteuerung (125);
mindestens einen primärseitigen Schalter (T11, T12), der von der primärseitigen Steuerung (123) gesteuert wird und mit der primärseitigen Wicklung (N1) verbunden ist,
einen sekundärseitigen Synchrongleichrichter (124), der von der Synchrongleichrichtungssteuerung (125) gesteuert wird und mit der mindestens einen sekundärseitigen Wicklung (N2, N3) zum Ausgeben einer Ausgangsspannung (Vout) an einer Ausgangsklemme (100) verbunden ist,
**gekennzeichnet durch:**

eine Entladungsschaltung (424), die mit der Ausgangsklemme verbunden ist und in Funktion die Ausgangsspannung während des Einschaltens des Resonanzleistungswandlers reduzieren kann,
wobei der Resonanzleistungswandler des Weiteren eine Aktivierungssignal-Eingangsklemme (102) zum Eingeben eines ersten Aktivierungssignals (Enable) und eine Verzögerungsschaltung (422) umfasst, die zwischen der Aktivierungssignal-Eingangsklemme (102) und der primärseitigen Steuerung (123) zum Bereitstellen eines zweiten Aktivierungssignals (Enable_LLC) angeschlossen ist,

des Weiteren umfassend eine Pullup-Schaltung (423), die mit der Aktivierungssignal-Eingangsklemme (102) verbunden ist, um die Entladungsschaltung (424) zu aktivieren, bevor das zweite Aktivierungssignal (Enable_LLC) an der primärseitigen Steuerung (123) bereitgestellt wird, und einen Feedbackschalter (T41), der von dem zweiten Aktivierungssignal (Enable_LLC) gesteuert wird, um die Entladungsschaltung (424) und die Pullup-Schaltung (423) zu deaktivieren.

2. Resonanzleistungswandler nach Anspruch 1, wobei die Entladungsschaltung (424) zwischen der Ausgangsklemme (100) und der Masse angeschlossen ist, wobei die Entladungsschaltung (325) einen Entladeschalter (T31, T42) und einen Entladewiderstand (R31, R43) umfasst, der zwischen der Ausgangsklemme und dem Entladeschalter (T31, T42) in Reihe geschaltet ist.

3. Resonanzleistungswandler nach einem der vorhergehenden Ansprüche, wobei der Resonanzleistungswandler als ein Halbbrücken-LLC-Resonanzwandler ausgebildet ist.

4. Resonanzleistungswandler nach einem der vorhergehenden Ansprüche, wobei der Entladeschalter (T31, T42) einen N-Kanal-Metalloxidhalbleiter-Feldeffekttransistor, MOSFET, umfasst.

5. Verfahren zum Neustarten eines Ausgangsgleichrichters eines Resonanzleistungswandlers nach einem der vorhergehenden Ansprüche, wobei das Verfahren folgende Schritte umfasst:

Aktivieren des Resonanzleistungswandlers zum Verlassen eines Standby-Modus des Resonanzleistungswandlers durch Eingeben eines ersten Aktivierungssignals (Enable),
Aktivieren der Entladungsschaltung (424), wobei die Entladungsschaltung (424) mit einer Ausgangsklemme (100) des Resonanzleistungswandlers verbunden ist, so dass eine Restausgangsspannung (Vout) an der Ausgangsklemme (100) reduziert wird,
nachdem der Entladungsschritt durchgeführt wurde, Bereitstellen des zweiten Aktivierungssignals (Enable_LLC) zum Aktivieren des Betriebs des Resonanzleistungswandlers,
wobei das erste Aktivierungssignal von der Verzögerungsschaltung (422) empfangen wird, welche das zweite Aktivierungssignal als das verzögerte erste Aktivierungssignal erzeugt, und
wobei die Entladungsschaltung (424) durch das erste Aktivierungssignal (Enable) aktiviert wird.

6. Verfahren nach Anspruch 5, wobei eine Mindestverzögerungszeit zwischen der Aktivierung der Entladungsschaltung und der Ausgabe des zweiten Aktivierungssignals festgelegt ist.

7. Verfahren nach Anspruch 6, wobei die Mindestverzögerungszeit als die Zeit berechnet wird, die eine maximal mögliche Restausgangsspannung benötigt, um auf Null entladen zu werden.

**Revendications**

1. Convertisseur de puissance à résonance comprenant :

un transformateur comportant un enroulement du côté primaire (N1) et au moins un enroulement du côté secondaire (N2, N3),
un contrôleur du côté primaire (123),
un contrôleur de redressement synchrone (125),
au moins un interrupteur du côté primaire (T11, T12) qui est commandé par ledit contrôleur du côté primaire (123) et qui est relié au dit enroulement du côté primaire (N1),
un redresseur synchrone du côté secondaire (124) qui est commandé par ledit contrôleur de redressement synchrone (125) et qui est relié au dit au moins un enroulement du côté secondaire (N2, N3) dans le but de délivrer en sortie une tension de sortie redressée (Vout) au niveau d'une borne de sortie (100),
**caractérisé par** :

un circuit de décharge (424) qui est relié à ladite borne de sortie et qui peut être utilisé pour abaisser ladite tension de sortie pendant le démarrage du convertisseur de puissance à résonance,
où le convertisseur de puissance à résonance comprend en outre une borne d'entrée de signal d'activation (102) permettant d'appliquer en entrée un premier signal d'activation (Enable), ainsi qu'un circuit de retard (422) qui est relié entre ladite borne d'entrée de signal d'activation (102) et le contrôleur du côté primaire (123) destiné à délivrer un second signal d'activation (Enable_LLC),

comprenant en outre un circuit d'excursion haute (423) qui est relié à ladite borne d'entrée de signal d'activation (102) dans le but d'activer ledit circuit de décharge (424) avant que le second signal d'activation (Enable_LLC) soit délivré au contrôleur du côté primaire (123), et

un interrupteur de rétroaction (T41) qui est commandé par le second signal d'activation (Enable_LLC) dans le but de désactiver ledit circuit de décharge (424) et ledit circuit d'excursion haute (423).

2. Convertisseur de puissance à résonance selon la revendication 1, dans lequel le circuit de décharge (424) est relié entre ladite borne de sortie (100) et la masse, ledit circuit de décharge (325) comprenant un interrupteur de décharge (T31, T42) et une résistance de décharge (R31, R43) qui est reliée en série entre ladite borne de sortie et l'interrupteur de décharge (T31, T42).

3. Convertisseur de puissance à résonance selon l'une des revendications précédentes, ledit convertisseur de puissance à résonance étant formé à partir d'un convertisseur résonnant LLC à demi pont.

4. Convertisseur de puissance à résonance selon l'une des revendications précédentes, dans lequel l'interrupteur de décharge (T31, T42) comprend un transistor à effet de champ à semi-conducteur d'oxyde métallique de canal N, MOSFET.

5. Procédé de redémarrage d'un redresseur de sortie dans un convertisseur de puissance à résonance conforme à l'une des revendications précédentes, ledit procédé comprenant les étapes suivantes :

l'activation dudit convertisseur de puissance à résonance afin de sortir d'un mode d'attente dudit convertisseur de puissance à résonance en appliquant en entrée ledit premier signal d'activation (Enable),

l'activation dudit circuit de décharge (424), le circuit de décharge (424) étant relié à une borne de sortie (100) du convertisseur de puissance à résonance de sorte à réduire la tension de sortie résiduelle (Vout) au niveau de la borne de sortie (100),

après l'exécution de l'étape de décharge, la délivrance dudit second signal d'activation (Enable_LLC) afin d'activer le fonctionnement du convertisseur de puissance à résonance,

dans lequel le premier signal d'activation est reçu par ledit circuit à retard (422) qui génère le second signal d'activation en tant que premier signal d'activation retardé, et

dans lequel le circuit de décharge (424) est activé par le premier signal d'activation (Enable).

6. Procédé selon la revendication 5, dans lequel il est déterminé une durée de retard minimale entre l'activation du circuit de décharge et la délivrance en sortie du second signal d'activation.

7. Procédé selon la revendication 6, dans lequel la durée de retard minimal est calculée comme étant la durée pendant laquelle la tension de sortie résiduelle maximale possible doit être déchargée jusqu'à zéro.

Fig. 1

Fig. 2

**Fig. 3**

EP 3 518 402 B1

*Fig. 4*

**EP 3 518 402 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090016083 A1

- US 20170288558 A1